# EUROPÄISCHE PATENTSCHRIFT

(11) **EP 3 625 091 B1**
(45) Veröffentlichungstag und Bekanntmachung des Hinweises auf die Patenterteilung: **16.06.2021**
(21) Anmeldenummer: 18729552.2
(22) Anmeldetag: 15.05.2018
(51) Int. Cl.: B60R 25/30, G08B 25/00

(54) **FAHRZEUG MIT RETTUNGSDROHNE**
VEHICLE HAVING A RESCUE DRONE
VÉHICULE ÉQUIPÉ D'UN DRONE DE SAUVETAGE

(30) Priorität: 15.05.2017 AT 504132017
(43) Veröffentlichungstag der Anmeldung: 25.03.2020
(73) Patentinhaber: Mahorka, Diethard, 3390 Melk (AT)
(72) Erfinder: Mahorka, Diethard, 3390 Melk (AT)
(74) Vertreter: Weiser & Voith Patentanwälte Partnerschaft
(86) Internationale Anmeldenummer: PCT/AT2018/060097
(87) Internationale Veröffentlichungsnummer: WO 2018/209375

(56) Entgegenhaltungen:
- DE-A1-102014 206 708
- DE-A1-102015 012 311

## Beschreibung

Die vorliegende Erfindung betrifft ein Fahrzeug mit einem fahrzeuginternen, fahrzeugdatenführenden Kommunikationsbus, einem daran angeschlossenen Kommunikationsmodul für Funkkommunikationen des Fahrzeugs und einer lösbar am Fahrzeug verankerten Rettungsdrohne.

Rettungsdrohnen bzw. UAVs (unmanned areal vehicles) für Fahrzeuge sind beispielsweise aus den Schriften DE 10 2014 206 708 A1, WO 2016/203322 A2 oder DE 10 2015 008 768 A1 bekannt. Die Rettungsdrohne ist in einem Karosserieabteil oder am Dach des Fahrzeugs montiert und hebt bei einem Unfall vom Fahrzeug ab oder wird von diesem abgeschossen oder abgesetzt, um die Unfallstelle mit einer Überwachungskamera zu erfassen und/oder mit einem Funksendeempfängern einen Notruf an eine Rettungseinsatzstelle abzusetzen. Die bekannten Rettungsdrohnen sind jedoch kostspielig und in ihren Anwendungen begrenzt, was einem breiten Einsatz in der Autoindustrie entgegensteht.

Die Erfindung setzt sich zum Ziel, die Nachteile des bekannten Standes der Technik zu überwinden und eine einfachere und kostengünstigere Lösung zur Ausstattung von Fahrzeugen mit Rettungsdrohnen zu schaffen.

Dieses Ziel wird mit einem Fahrzeug der einleitend genannten Art erreicht, welches sich gemäß der Erfindung dadurch auszeichnet, dass die Rettungsdrohne im verankerten Zustand an den Kommunikationsbus angeschlossen ist und zumindest das Kommunikationsmodul enthält, wobei die Rettungsdrohne dafür ausgebildet ist, im gelösten Zustand das Kommunikationsmodul für eigene Funkkommunikationen zu verwenden.

Gemäß der Erfindung wird das für den normalen Fahrzeugbetrieb erforderliche Kommunikationsmodul des Fahrzeugs, beispielsweise ein Mobilfunkmodul für Telefonate, den Datenempfang von Verkehrsnachrichten oder das Senden und Empfangen von Daten, z.B. Wartungsdaten für den Fahrzeughersteller usw., in der Rettungsdrohne angeordnet. Die Rettungsdrohne kann dann im Notfall, wenn sie sich vom Fahrzeug gelöst hat, dieses Kommunikationsmodul mit- bzw. wiederverwenden ("re-use") und braucht somit kein eigenes Kommunikationsmodul. Oder, umgekehrt betrachtet, stellt die Rettungsdrohne ihr Kommunikationsmodul dem Fahrzeug im "normalen" Betrieb als Kommunikationsmodul zur Verfügung. Fahrzeug und Rettungsdrohne teilen sich somit ein gemeinsames Kommunikationsmodul, wodurch eine signifikante Kosteneinsparung erzielt wird, welche den industriellen Einsatz erleichtert.

In einer ersten bevorzugten Ausführungsform der Erfindung ist das Kommunikationsmodul ein am Fahrzeug, z.B. dem Fahrzeugdach oder -heck, absprengbar verankertes Antennenmodul. Ein solches Kommunikationsmodul braucht nicht alle elektronischen Komponenten für die Generierung und Verarbeitung von Nachrichten, die in den Funkkommunikationen transportiert werden, enthalten, sondern kann dazu mit weiteren elektronischen Komponenten, beispielsweise einem Prozessor, Navigationsgerät, Bordelektronik usw. zusammenarbeiten; als Antennenmodul enthält es beispielsweise nur unmittelbar für die Funkkommunikation erforderliche Komponenten wie Antennen, Antennenverstärker, Frequenzumsetzer, Schnittstellen usw.

Gemäß einem weiteren bevorzugten Merkmal der Erfindung ist das Kommunikationsmodul selbst zur Funkkommunikation in einem Mobilfunknetz ausgebildet, bevorzugt nach dem LTE-Standard. Das Kommunikationsmodul ist z.B. ein "abgespecktes" Mobiltelefon bzw. Smartphone, z.B. ohne Tastatur und ohne Anzeige.

Eine besonders vorteilhafte Ausführungsform der Erfindung für Fahrzeuge, welche mindestens einen an den Kommunikationsbus angeschlossenen Sensor für den Betrieb des Fahrzeugs haben, zeichnet sich dadurch aus, dass auch dieser zumindest eine Sensor in der Rettungsdrohne angeordnet und letztere dafür ausgebildet ist, im gelösten Zustand Messdaten des Sensors über das Kommunikationsmodul an eine entfernte Zentrale zu senden. Auf diese Weise können Sensoren des Fahrzeugs von der Rettungsdrohne mit- bzw. wiederverwendet werden bzw. umgekehrt betrachtet Sensoren der Rettungsdrohne vom Fahrzeug. Bei den Sensoren kann es sich beispielsweise um 2-D- oder 3-D-Kameras, Radar- oder Lasersensoren, Schall- oder Ultraschallsensoren, Windmesser, Trägheitsmesseinrichtungen oder Satellitennavigationsempfänger handeln, die im Fahrzeug z.B. für Fahrerassistenzsysteme und in der Rettungsdrohne für Überwachungs- und Flugsteuerungszwecke Verwendung finden.

Die Rettungsdrohne kann drahtgebunden an den Kommunikationsbus angeschlossen sein, wobei beim Loslösen der Rettungsdrohne vom Fahrzeug auch die Drahtverbindung getrennt wird. Ein solcher drahtgebundener Anschluss der Rettungsdrohne an den Kommunikationsbus gewährleistet einen besonders störungsunanfälligen Normalbetrieb des Fahrzeugs.

Alternativ oder zusätzlich kann die Rettungsdrohne über eine Kurzreichweiten-Drahtlosverbindung an den Kommunikationsbus angeschlossen sein. Bevorzugte Ausführungsformen solcher Kurzreichweiten-Drahtlosverbindungen sind alle Arten von optischen, kapazitiven oder induktiven Verbindungen, WLAN-, LPWAN-(z.B. Sigfox, Weighless P, LoRa, NBIoT), Bluetooth- oder Infrarotverbindungen. Dadurch kann einerseits Verdrahtung innerhalb des Fahrzeugs eingespart werden, und andererseits kann die Rettungsdrohne im gelösten Zustand weiter mit dem Fahrzeug kommunizieren, beispielsweise Daten vom Kommunikationsbus empfangen und über das Kommunikationsmodul an eine entfernte Einsatzzentrale senden.

Darüberhinaus eröffnet die Möglichkeit einer Kurzreichweiten-Drahtlosverbindung zwischen Rettungsdrohne und Fahrzeug auch eine Datenübertragung von der Rettungsdrohne zum Fahrzeug, um dieses bei einem Notfall oder Unfall, wenn sich die Rettungsdrohne gelöst hat, z.B. mit Hilfe der Rettungsdrohne von der Einsatzzentrale aus fernzusteuern. So ist in einer weiteren bevorzugten Ausführungsform der Erfindung für Fahrzeuge, welche mindestens einen an den Kommunikationsbus angeschlossenen Aktor für den Betrieb des Fahrzeugs haben, die Rettungsdrohne dafür ausgebildet, im gelösten Zustand Steuerdaten über das Kommunikationsmodul zu empfangen und über die Kurzreichweiten-Drahtlosverbindung an den Aktor zu senden.

Ein solcher Aktor für den Betrieb des Fahrzeugs kann beispielsweise die Funktion einer Zentralverriegelung, eines Lenkrads, Gaspedals oder Bremspedals haben, so dass das Fahrzeug im Notfall oder bei einem Unfall mit Hilfe der Rettungsdrohne von einer Rettungsleitstelle aus ferngesteuert werden kann, beispielsweise ent- oder verriegelt werden, aus einer Gefahrenzone geführt oder auf den Pannenstreifen gelenkt werden, usw. Dazu können auch die in der Rettungsdrohne verbauten Sensoren, Kameras, Radar- oder Lasersensoren usw. verwendet werden. Beispielsweise kann ein Videobild der Umgebung der Rettungsdrohne oder des in Not geratenen oder verunfallten Fahrzeugs von der Rettungsdrohne an eine Einsatzzentrale übertragen werden, und dort kann eine Einsatzkraft die Notfallsituation anhand der Sichtverbindung beurteilen und das Fahrzeug entsprechend fernsteuern.

Zusätzlich kann die Rettungsdrohne auch dafür ausgebildet sein, Steuerdaten für ein Fremdfahrzeug über das Kommunikationsmodul zu empfangen und über die Kurzreichweiten-Drahtlosverbindung an ein solches Fremdfahrzeug in der Umgebung des Fahrzeugs zu senden. Damit kann das Fremdfahrzeug beispielsweise zur Hilfestellung veranlasst werden, z.B. indem auf einem Display des Fremdfahrzeug eine entsprechende Nachricht für den Fahrer angezeigt oder das Fremdfahrzeug direkt ferngesteuert wird, insbesondere wenn es insassenlos geparkt ist, um es zum Rangieren oder Abschleppen des verunfallten Fahrzeugs zu manövrieren.

Gemäß weiteren bevorzugten Merkmalen der Erfindung kann die Rettungsdrohne mit einer oder mehreren Überwachungskameras, Leuchten und/oder Lichtsignalen ausgestattet sein. Damit kann z.B. auf einer Autobahn eine Unfallsituation für andere Verkehrsteilnehmer signalisiert werden, sodass diese beispielsweise zur Bildung einer Rettungsgasse veranlasst werden.

Die Rettungsdrohne ist bevorzugt vom Bordnetz des eigenen oder eines fremden Fahrzeugs oder von anderen Einrichtungen aufladbar, besonders bevorzugt induktiv, und/oder mit einem Solarmodul zur Solarstromversorgung ausgestattet.

Als Rettungsdrohne eignet sich jedes in der Technik bekannte UAV. Bevorzugt ist die Rettungsdrohne ein Multikopter, der im verankerten Zustand in oder an der Außenhülle des Fahrzeugs gelagert ist, besonders bevorzugt abgedichtet. Ein solcher Multikopter kann entsprechend klein ausgeführt werden und eine stationäre Position in der Luft über der Unfall- oder Notfallstelle einnehmen, wie in der Technik bekannt.

Die Verankerungseinrichtung, mittels welcher die Rettungsdrohne lösbar am Fahrzeug verankert ist, kann von jeder in der Technik bekannten Art sein, beispielsweise eine steuerbare Ausklinkeinrichtung, ein pneumatisch, hydraulisch, mit Federkraft oder mit Explosivstoffen betriebenes ballistisches Abwurfgerät od.dgl. Auch eine magnetische Verankerungseinrichtung ist möglich, mittels welcher die Rettungsdrohne durch magnetisches Umpolen der Verankerungseinrichtung vom Fahrzeug abgestoßen wird. Die Verankerungseinrichtung kann aber auch einfach ein öffenbares Abteil an oder in der Außenhülle des Fahrzeugs sein, aus dem die Rettungsdrohne aufsteigen kann. Auch ist es möglich, dass die Rettungsdrohne mitsamt einer sie schützenden Abdeckung, z.B. einer Kuppel oder "Haifischflosse" des Fahrzeugs, abgeworfen, abgeschossen oder abgesprengt wird.

Die Erfindung wird nachstehend anhand von in den beigeschlossenen Zeichnungen dargestellten Ausführungsbeispielen näher erläutert, in denen zeigt:
Fig. 1 das erfindungsgemäße Fahrzeug mit Rettungsdrohne in Verbindung mit einem Mobilfunknetz und einer Einsatzzentrale in einer schematischen Darstellung; und
Fig. 2 das Fahrzeug von Fig. 1 mit losgelöster Rettungsdrohne und mit einem Fremdfahrzeug in schematischer Darstellung.

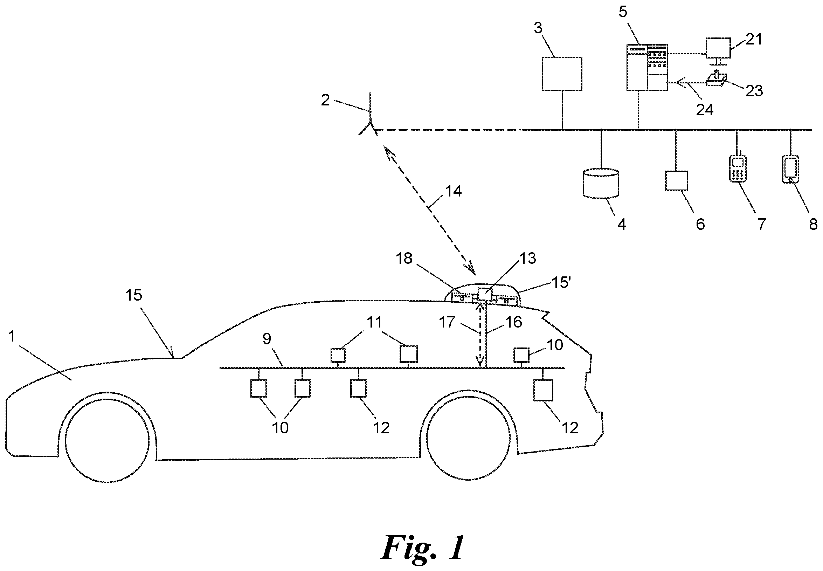

Gemäß Fig. 1 bewegt sich ein Fahrzeug 1 im Funkabdeckungsbereich eines Mobilfunknetzes 2, das z.B. nach einem 2G-, 3G-, 4G-, 5G-Mobilfunknetz-Standard wie GSM, LTE oder UMTS ausgebildet ist. In dem gezeigten Beispiel ist das Fahrzeug 1 ein Personen- oder Lastkraftwagen, das Fahrzeug 1 kann jedoch jedes beliebige Land-, Luft- oder Wasserfahrzeug sein. Über das Mobilfunknetz 2 kann das Fahrzeug 1 mit verschiedensten Teilnehmern kommunizieren, z.B. einem Telemetrieserver 3 des Fahrzeugherstellers, einer Verkehrsnachrichtenzentrale 4, einer Notfall-Einsatzzentrale 5, beliebigen Datendiensten 6 oder einfach nur weiteren Teilnehmern 7, 8 des Mobilfunknetzes 2. Es versteht sich, dass die beispielhaften Kommunikationspartner 3 - 8 des Fahrzeugs 1 direkt oder über beliebige weitere Telekommunikations- und/oder Datennetze oder das Internet an das Mobilfunknetz 2 angeschlossen sein können.

Das Fahrzeug 1 verfügt über einen fahrzeuginternen Kommunikationsbus 9, z.B. einen CAN-Bus, über den Fahrzeugkomponenten 10 - 12 mit einander kommunizieren und dabei Fahrzeugdaten austauschen, wie in der Technik bekannt. Bei den Komponenten 10 - 12 kann es sich um beliebige Sensoren 10, Aktoren 11 und/oder Recheneinheiten 12 des Fahrzeugs 1 handeln.

Beispiele von Sensoren 10 sind 2-D- oder 3-D-Kameras, Radarsensoren, Lasersensoren, Schall- oder Ultraschallsensoren usw., welche das Innere oder die Umgebung des Fahrzeugs 1 erfassen bzw. vermessen; Umweltsensoren wie Temperatur-, Luftdruck-, Luftfeuchtigkeits- oder Windmesser; Trägheitsmesseinrichtungen (Inertial Measurement Units, IMUs) zur Erfassung von Raumlage ("Schwerkraftmesser") und Beschleunigung/Verzögerung ("Beschleunigungsmesser") des Fahrzeugs 1; oder Satellitennavigationsempfänger zur Bestimmung der Position des Fahrzeugs 1, beispielsweise GPS-, Galileo- oder Glonass-Empfänger usw.

Beispiele von Aktoren 11 sind Zentralverriegelungskomponenten, Fensterheber, Motorsteuerungsgeräte, Kraftstoffeinspritzpumpen, Bremssteuerungen, Lenkradaktuatoren usw., allgemein all jene Elemente des Fahrzeugs 1, welche die Funktionen von Zentralverriegelung, Lenkrad, Gaspedal, Bremspedal, Gangwählhebel usw. innehaben.

Beispiele von Recheneinheiten 12 sind elektronische Motorsteuerungen (Engine Control Units, ECUs), Navigations-, Informations- und Unterhaltungssysteme, Mobiltelefonschnittstellen, Freisprecheinrichtungen usw.

An den Kommunikationsbus 9 ist ein Kommunikationsmodul 13 angeschlossen, über welches das Fahrzeug 1 Funkkommunikationen 14 senden und empfangen kann, genauer die Komponenten 10 - 12 Daten an die Einrichtungen 3 - 8 senden bzw. von diesen empfangen können.

Das Kommunikationsmodul 13 kann von jeder in der Technik bekannten Art sein, beispielsweise ein Sendeempfänger zur Kommunikation mit Funkbaken eines Straßenmaut- oder Parkplatzüberwachungssystems, eine LPWAN- (Lower Power Wide Area Network) - Schnittstelle, ein Sendeempfänger nach den Standards DSRC, WLAN, SigFox, LoRA, Weighless P, Narrowband IoT od.dgl. Bevorzugt ist das Kommunikationsmodul 13 jedoch für Funkkommunikationen 14 in dem Mobilfunknetz 2 ausgebildet.

In einer vereinfachten Ausführungsform umfasst das Kommunikationsmodul 13 nur die eigentlichen Hochfrequenzbauteile zur Funkkommunikation 14, wie Antennen, Antennenverstärker, Frequenzumsetzer und Schnittstellen zum Kommunikationsbus 9, während weitere für die Funkkommunikation 14 erforderliche Bauteile in einer oder mehrerer der Komponenten 10 - 12 beheimatet sind.

Das Kommunikationsmodul 13 befindet sich beispielsweise direkt in oder an der Außenhülle 15 des Fahrzeugs 1, z.B. in einer Dach- oder Heckflosse 15' der Außenhülle 15.

Das Kommunikationsmodul 13 ist über eine drahtgebundene Verbindung 16 an den Kommunikationsbus 9 angeschlossen. Anstelle oder zusätzlich zu der drahtgebundenen Verbindung 16 kann das Kommunikationsmodul 13 über eine Kurzreichweiten-Drahtlosverbindung 17 an den Kommunikationsbus 9 angeschlossen sein. Die Kurzreichweiten-Drahtlosverbindung 17 kann auf jede in der Technik bekannt Art realisiert sein, beispielsweise als Funkverbindung nach den Standards WLAN, Bluetooth, LPWAN, SigFox, LoRA, Weighless P, Narrowband IoT oder als optische Verbindung, z.B. Infrarot-Verbindung, welche sogar Wasser durchdringen kann, und umfasst entsprechende Verbindungskomponenten 17', 17" am Kommunikationsmodul 13 in der Rettungsdrohne 18 einerseits und am Kommunikationsbus 9 andererseits.

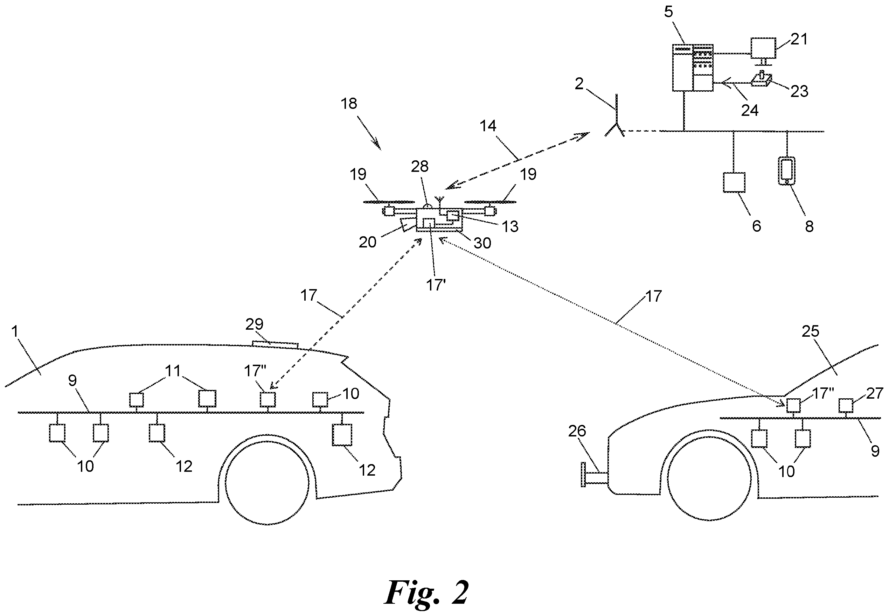

Wie in den Fig. 1 und 2 gezeigt, umfasst das Fahrzeug 1 ferner eine Rettungsdrohne 18, die am Fahrzeug 1 lösbar verankert ist, so dass sie von einer ersten, am Fahrzeug 1 verankerten Stellung (Fig. 1) in eine zweite, vom Fahrzeug 1 getrennte, losgelöste Stellung (Fig. 2) versetzt werden kann. Die Rettungsdrohne 18, ein sogenanntes UAV (unmanned areal vehicle), ist autark flugfähig und kann in der losgelösten Stellung (Fig. 2) beispielsweise über dem Fahrzeug 1 fliegen bzw. schweben. Die Rettungsdrohne 18 kann insbesondere auch mit einer Hindernissen autark ausweichenden Flugsteuerung ausgestattet sein. Die Rettungsdrohne 18 kann auf jede in der Technik bekannte Art ausgebildet sein, beispielsweise in der Art eines Flächen- oder Drehflüglers, z.B. eines Helikopters. Bevorzugt ist die Rettungsdrohne 18 ein Multikopter mit mehreren, z.B. drei, vier, sechs oder acht Rotoren 19, die auch paarweise redundant angeordnet bzw. verdoppelt sein können.

Die Rettungsdrohne 18 wird entweder vom Fahrer des Fahrzeugs 1 in einem Notfall durch Betätigen einer an den Kommunikationsbus 9 angeschlossenen Steuerung oder automatisch bei einem Unfall des Fahrzeugs 1, z.B. durch Ansprechen eines an den Kommunikationsbus 9 angeschlossenen oder in der Rettungsdrohne 18 angeordneten Crashsensors oder durch Errechnung des Bewegungszustandes aus anderen Sensordaten, gelöst und in den Flugbetrieb (Fig. 2) versetzt. Die Rettungsdrohne 18 kann dazu beispielsweise aus einem öffenbaren Abteil an oder in der Außenhülle 15 des Fahrzeugs 1 aufsteigen, oder sie wird gleich mitsamt einer sie schützenden Abdeckung, z.B. einer Kuppel oder der Flosse 15', abgesprengt. Auch andere Arten des Loslösens der Rettungsdrohne 18 sind möglich, z.B. ein ballistisches Abschießen, ein Abwerfen od.dgl. aus einer entsprechenden Verankerungseinrichtung. Die Verankerungseinrichtung kann beispielsweise auch magnetischer Art sein und das Abwerfen durch magnetische Umpolung bewirkt werden.

Das Kommunikationsmodul 13 ist in der Rettungsdrohne 18 angeordnet und wird somit beim Loslösen der Rettungsdrohne 18 (Fig. 2) - unter Auftrennen der gegebenenfalls vorhanden Drahtverbindung 16 - vom Fahrzeug 1 getrennt. Das Fahrzeug 1 und die Rettungsdrohne 18 teilen sich somit ein einziges Kommunikationsmodul 13.

Im losgelösten Zustand von Fig. 2 kommuniziert die Rettungsdrohne 18 über das Kommunikationsmodul 13 selbst mit einer oder mehreren der Komponenten 3 - 8. Die Rettungsdrohne 18 kann beispielsweise Überwachungsbilder einer in der Rettungsdrohne 18 angeordneten Überwachungskamera 20 an ein Terminal 21 in der Einsatzzentrale 5 senden, einen Notruf an die Einsatzzentrale 5 oder an Teilnehmerendgeräte 7, 8 senden, od.dgl. Da die Rettungsdrohne 18 zuvor (Fig. 1) noch mit dem Kommunikationsbus 9 verbunden war, kann sie auch Daten, die sie am Kommunikationsbus 9 protokolliert und gespeichert hat, anschließend (Fig. 2) über das Kommunikationsmodul 13 an die Einrichtungen 3 - 8 senden.

Das Fahrzeug 1 und die Rettungsdrohne 18 können sich nicht nur das Kommunikationsmodul 13 sondern auch einen oder mehrere der Sensoren 10 oder Recheneinheiten 12 teilen. So können beispielsweise Sensoren 10 wie 2-D- oder 3-D-Kameras, Radarsensoren, Lasersensoren, Schall- oder Ultraschallsensoren, Windmesser, Trägheitsmesseinrichtungen oder Satellitennavigationsempfänger in der Rettungsdrohne 18 angeordnet sein und nach ihrer Trennung vom Fahrzeug 1 von der Rettungsdrohne 18 selbst verwendet werden, beispielsweise für Überwachungszwecke oder zur Fluglagensteuerung. Die Sensoren 10 können auch dazu dienen, den Bewegungszustand des Fahrzeugs 1 in Echtzeit zu erfassen, die Notwendigkeit einer Absprengung der Rettungsdrohne 18 daraus abzuleiten und die Rettungsdrohne 18 mit Sensordaten zu versorgen, sodass die Rettungsdrohne 18 z.B. ballistische Parameter für ihre Flugbahn errechnen und prognostizieren kann.

Die Messdaten der Sensoren 10 können von der Rettungsdrohne 18 in ihrem gelösten Zustand (Fig. 2) auch über das Kommunikationsmodul 13 an die Einrichtungen 3 - 8 gesandt werden, beispielsweise an das Terminal 21 der Einsatzzentrale 5.

Wenn die Rettungsdrohne 18 - sei es alternativ oder zusätzlich zur Drahtverbindung 16 - über die Kurzreichweiten-Drahtlosverbindung 17 an den Kommunikationsbus 9 angeschlossen ist, kann die Drahtlosverbindung 17 auch nach dem Abtrennen der Rettungsdrohne 18 weiterverwendet werden. Beispielsweise können über die Drahtverbindung 17 fortlaufend Daten vom Kommunikationsbus 9, z.B. von den Sensoren 10 und Recheneinheiten 12, empfangen und über das Kommunikationsmodul 13 an die Einrichtungen 3 - 8 gesandt werden.

Darüberhinaus kann die Drahtlosverbindung 17 auch dazu verwendet werden, Daten in der umgekehrten Richtung, d.h. von den Einrichtungen 3 - 8 zum Fahrzeug 1, zu senden. Dies kann insbesondere dazu verwendet werden, die an den Kommunikationsbus 9 angeschlossenen Aktoren 11 des Fahrzeugs 1 aus der Ferne zu betätigen. So kann das Fahrzeug 1 bei einem Unfall oder im Notfall mit Hilfe der Rettungsdrohne 18 ferngesteuert werden. Beispielsweise kann in der Einsatzzentrale 5 eine Eingabeeinrichtung 23 für Steuerdaten 24 wie Lenkradstellung, Gaspedalstellung, Bremspedalstellung usw. des Fahrzeugs 1 vorgesehen sein, welche Steuerdaten 24 über das Mobilfunknetz 2 zum Kommunikationsmodul 13 der Rettungsdrohne 18 und von dort über die Kurzreichweiten-Drahtlosverbindung 17 zum Kommunikationsbus 9 und den entsprechenden Aktoren 11 und/oder Recheneinheiten 12 gesandt werden.

Die Rettungsdrohne 18 kann überdies dazu verwendet werden, Steuerdaten 24 für ein allfälliges Fremdfahrzeug 25 ("Car-to-Car", C2C) oder für stationäre Einrichtungen ("Car-to-X", C2X) über das Kommunikationsmodul 13 zu empfangen und über die Kurzreichweiten-Drahtlosverbindung 17 an das Fremdfahrzeug 25 oder diese Einrichtungen zu senden. Das Fremdfahrzeug 25 kann beispielsweise ein Einsatzfahrzeug oder einfach ein am Straßenrand parkendes Fahrzeug sein, das für den Aufbau der Drahtlosverbindung 17 ausgebildet und über diese fernsteuerbar ist. Das Fremdfahrzeug 25 kann auf diese Weise z.B. mittels der Eingabeeinrichtung 23 zum verunfallten oder in Not geratenen Fahrzeug 1 bewegt werden, um dieses beispielsweise aus einer Gefahrenzone zu bewegen, abzuschleppen oder an den Straßenrand schieben. Zu diesem Zweck kann das Fremdfahrzeug 25 eine fernsteuerbare Abschleppeinrichtung 26 haben. Wenn das Fremdfahrzeug 25 ein bemanntes Fahrzeug ist, kann die Rettungsdrohne 18 über die Kurzreichweiten-Drahtlosverbindung 17 auch Informationen an eine Anzeigeeinrichtung 27 im Fremdfahrzeug 25 senden, um dem Fahrer zur Hilfeleistung zu instruieren.

Die Rettungsdrohne 18 kann mit einer oder mehreren Leuchten zur Beleuchtung der Unfallstelle des Fahrzeugs 1 ausgestattet sein. Auch kann die Rettungsdrohne 18 eine oder mehrere Lichtsignale 28 tragen, mit denen z.B. auf einer Autobahn eine Unfallsituation für andere Verkehrsteilnehmer signalisiert werden kann, sodass diese beispielsweise zur Bildung einer Rettungsgasse veranlasst werden.

Die Rettungsdrohne 18 ist ferner bevorzugt mit einer aufladbaren Batterie versehen, die in der verankerten Stellung (Fig. 1) vom Bordnetz des Fahrzeugs 1 drahtgebunden oder induktiv aufladbar ist. Alternativ oder zusätzlich kann die Rettungsdrohne 18 mit einem Solarmodul (nicht gezeigt) zur Solarstromversorgung aller ihrer Komponenten ausgestattet sein.

Die Rettungsdrohne 18 kann z.B. in einer Aussparung der Außenhülle 15 des Fahrzeugs 1 lösbar verankert sein, z.B. teilweise im Fahrzeugdach versenkt, so dass ihre Rotoren 19 im wesentlichen bündig mit der Außenhülle 15 bzw. dem Fahrzeugdach abschließen, während die Flosse 15' vorragt, welche das Kommunikationsmodul 13 und allfällige Sensoren 10 beherbergt. Über Dichtungen sind die Rettungsdrohne 18, insbesondere ihre Rotoren 19 und die als Gehäuse des Kommunikationsmoduls 13 dienende Flosse 15', in der Außenhülle 15 im verankerten Zustand abgedichtet gelagert.

Die Verankerungseinrichtung kann beispielsweise zwei magnetische Elemente 29, 30 enthalten, von denen zumindest eines ein umpolbarer Elektromagnet ist, so dass durch Umpolen die Verankerungseinrichtung 29, 30 gelöst und die Rettungsdrohne 18 vom Fahrzeug 1 abgestoßen wird.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Fahrzeug, mit einem fahrzeuginternen, fahrzeugdatenführenden Kommunikationsbus (9), einem daran angeschlossenen Kommunikationsmodul (13) für Funkkommunikationen (14) des Fahrzeugs, und einer lösbar am Fahrzeug (1) verankerten Rettungsdrohne (18), **dadurch gekennzeichnet, dass** die Rettungsdrohne (18) im verankerten Zustand an den Kommunikationsbus (9) angeschlossen ist und zumindest das Kommunikationsmodul (13) enthält, welches im verankerten Zustand die Funkkommunikationen des Fahrzeugs sendet und empfängt, wobei die Rettungsdrohne (18) dafür ausgebildet ist, im gelösten Zustand das Kommunikationsmodul (13) für eigene Funkkommunikationen (14) zu verwenden.

2. Fahrzeug nach Anspruch 1, **dadurch gekennzeichnet, dass** das Kommunikationsmodul (13) ein am Fahrzeug absprengbar verankertes Antennenmodul ist.

3. Fahrzeug nach Anspruch 1 oder 2, **dadurch gekennzeichnet, dass** das Kommunikationsmodul (13) zur Funkkommunikation in einem Mobilfunknetz (2) ausgebildet ist, bevorzugt nach dem LTE-Standard.

4. Fahrzeug nach einem der Ansprüche 1 bis 3, mit zumindest einem an den Kommunikationsbus (9) angeschlossenen Sensor für den Betrieb des Fahrzeugs (1), **dadurch gekennzeichnet, dass** der Sensor (10) in der Rettungsdrohne (18) angeordnet und diese dafür ausgebildet ist, im gelösten Zustand Messdaten des Sensors (10) über das Kommunikationsmodul (18) an eine entfernte Zentrale (5) zu senden.

5. Fahrzeug nach Anspruch 4, **dadurch gekennzeichnet, dass** der zumindest eine Sensor (10) eine 2D- oder 3D-Kamera, ein Radarsensor, ein Lasersensor, ein Windmesser, eine Trägheitsmesseinrichtung oder ein Satellitennavigationsempfänger ist.

6. Fahrzeug nach einem der Ansprüche 1 bis 5, **dadurch gekennzeichnet, dass** die Rettungsdrohne (13) drahtgebunden an den Kommunikationsbus (9) angeschlossen ist.

7. Fahrzeug nach einem der Ansprüche 1 bis 6, **dadurch gekennzeichnet, dass** die Rettungsdrohne (18) über eine Kurzreichweiten-Drahtlosverbindung (17) an den Kommunikationsbus (9) angeschlossen ist.

8. Fahrzeug nach Anspruch 7, **dadurch gekennzeichnet, dass** die Kurzreichweiten-Drahtlosverbindung (17) eine WLAN-, LPWAN-, Bluetooth- oder Infrarot-Verbindung ist.

9. Fahrzeug nach Anspruch 7 oder 8, mit zumindest einem an den Kommunikationsbus (9) angeschlossenen Aktor (11) für den Betrieb des Fahrzeugs (1), **dadurch gekennzeichnet, dass** die Rettungsdrohne (18) dafür ausgebildet ist, im gelösten Zustand Steuerdaten (24) über das Kommunikationsmodul (13) zu empfangen und über die Kurzreichweiten-Drahtlosverbindung (17) an den Aktor (11) zu senden.

10. Fahrzeug nach Anspruch 9, **dadurch gekennzeichnet, dass** der zumindest eine Aktor für den Betrieb des Fahrzeugs (1) die Funktion einer Zentralverriegelung, eines Lenkrads, Gaspedals oder Bremspedals hat.

11. Fahrzeug nach einem der Ansprüche 7 bis 10, **dadurch gekennzeichnet, dass** die Rettungsdrohne (18) dafür ausgebildet ist, Steuerdaten (24) für ein Fremdfahrzeug (25) über das Kommunikationsmodul (13) zu empfangen und über die Kurzreichweiten-Drahtlosverbindung (17) an ein solches Fremdfahrzeug (25) in der Umgebung des Fahrzeugs (1) zu senden.

12. Fahrzeug nach einem der Ansprüche 1 bis 11, **dadurch gekennzeichnet, dass** die Rettungsdrohne (18) mit einer Überwachungskamera (10, 20) einer Leuchte und/oder einem Lichtsignal (28) ausgestattet ist.

13. Fahrzeug nach einem der Ansprüche 1 bis 12, **dadurch gekennzeichnet, dass** die Rettungsdrohne (18) vom Bordnetz des Fahrzeugs (1) bevorzugt induktiv aufladbar und/oder mit einem Solarmodul ausgestattet ist.

14. Fahrzeug nach einem der Ansprüche 1 bis 13, **dadurch gekennzeichnet, dass** die Rettungsdrohne (18) ein Multikopter ist, der im verankerten Zustand in oder an der Außenhülle (15) des Fahrzeugs (1) bevorzugt abgedichtet gelagert ist.

15. Fahrzeug nach einem der Ansprüche 1 bis 14, **dadurch gekennzeichnet, dass** die Rettungsdrohne (18) mittels einer magnetischen Verankerungseinrichtung (29, 30) am Fahrzeug (1) verankert und durch magnetisches Umpolen der Verankerungseinrichtung (29, 30) vom Fahrzeug (1) abstoßbar ist.

## Claims

1. Vehicle with a vehicle-internal communication bus (9) carrying vehicle data, a communication module (13) connected thereto for radio communications (14) of the vehicle, and a rescue drone (18) detachably anchored to the vehicle (1), **characterised in that** the rescue drone (18) is connected to the communication bus (9) in the anchored state and contains at least said communication module (13) which sends and receives the radio communications of the vehicle in the anchored state, wherein the rescue drone (18) is configured to utilise the communication module (13) for its own radio communications (14) in the detached state.

2. Vehicle according to claim 1, **characterised in that** the communication module (13) is an antenna module anchored to the vehicle ejectably.

3. Vehicle according to claim 1 or 2, **characterised in that** the communication module (13) is configured for radio communication in a mobile radio network (2), preferably according to the LTE standard.

4. Vehicle according to any one of claims 1 to 3, with at least one sensor connected to the communication bus (9) for the operation of the vehicle (1), **characterised in that** the sensor (10) is located in the rescue drone (18) and the rescue drone (18) is configured to send, in the detached state, measurement data of the sensor (10) via the communication module (13) to a remote control centre (5).

5. Vehicle according to claim 4, **characterised in that** said at least one sensor (10) is a 2D or 3D camera, a radar sensor, a laser sensor, an anemometer, an inertia measuring device or a satellite navigation receiver.

6. Vehicle according to any one of claims 1 to 5, **characterised in that** the rescue drone (18) is connected to the communication bus (9) by wire.

7. Vehicle according to any one of claims 1 to 6, **characterised in that** the rescue drone (18) is connected to the communication bus (9) via a short-range wireless connection (17) .

8. Vehicle according to claim 7, **characterised in that** the short-range wireless connection (17) is a WLAN, LPWAN, Bluetooth or infrared connection.

9. Vehicle according to claim 7 or 8, with at least one actuator (11) connected to the communication bus (9) for the operation of the vehicle (1), **characterised in that** the rescue drone (18) is configured to receive control data (24) via the communication module (13) and to transmit the control data (24) via the short-range wireless connection (17) to the actuator (11) in the detached state.

10. Vehicle according to claim 9, **characterised in that** said at least one actuator has the function of a central locking, of a steering wheel, of an accelerator pedal, or of a break pedal for the operation of the vehicle (1).

11. Vehicle according to any one of claims 7 to 10, **characterised in that** the rescue drone (18) is configured to receive control data (24) for a foreign vehicle (25) via the communication module (13) and to send the control data (24) via the short-range wireless connection (17) to such a foreign vehicle (25) in the vicinity of the vehicle (1).

12. Vehicle according to any one of claims 1 to 11, **characterised in that** the rescue drone (18) is equipped with a surveillance camera (10, 20), a lamp and/or a light signal (28).

13. Vehicle according to any one of claims 1 to 12, **characterised in that** the rescue drone (18) is chargeable by the on-board power network of the vehicle (1), preferably inductively, and/or is equipped with a solar module.

14. Vehicle according to any one of claims 1 to 13, **characterised in that** the rescue drone (18) is a multicopter which is mounted, in the anchored state, on the outer shell (15) of the vehicle (1), preferably in a sealed manner.

15. Vehicle according to any one of claims 1 to 14, **characterised in that** the rescue drone (18) is anchored to the vehicle (1) by means of a magnetic anchoring unit (29, 30) and can be pushed off by reversing the polarity of the anchoring device (29, 30).

## Revendications

1. Véhicule muni d'un bus de communication (9) interne au véhicule et acheminant des données concernant le véhicule, d'un module de communication (13) lui étant raccordé pour des communications radio (14) du véhicule, et d'un drone de sauvetage (18) amarré de manière détachable sur le véhicule (1), **caractérisé en ce que** le drone de sauvetage (18) est raccordé au bus de communication (9) dans l'état amarré et contient au moins le module de communication (13), lequel envoie et reçoit les communications radio dans l'état amarré, où le drone de sauvetage (18) est conçu pour utiliser le module de communication (13) pour ses propres communications radio (14) dans l'état détaché.

2. Véhicule selon la revendication 1, **caractérisé en ce que** le module de communication (13) est un module d'antenne amarré sur le véhicule de manière éjectable .

3. Véhicule selon la revendication 1 ou 2, **caractérisé en ce que** le module de communication (13) est conçu pour la communication radio dans un réseau radio mobile (2), de préférence selon la norme LTE.

4. Véhicule selon l'une des revendications 1 à 3, avec au moins un capteur raccordé au bus de communication (9) pour le fonctionnement du véhicule (1), **caractérisé en ce que** le capteur (10) est disposé dans le drone de sauvetage (18) et que celui-ci est conçu pour envoyer, dans l'état détaché, des données de mesure du capteur (10) à un central (5) éloigné, par le biais du module de communication (13).

5. Véhicule selon la revendication 4, **caractérisé en ce que** l'au moins un capteur (10) est une caméra 2D ou 3D, un capteur radar, un capteur laser, un anémomètre, un dispositif de mesure d'inertie ou un récepteur de navigation par satellite.

6. Véhicule selon l'une des revendications 1 à 5, **caractérisé en ce que** le drone de sauvetage (18) est raccordé au bus de communication (9) de manière filaire.

7. Véhicule selon l'une des revendications 1 à 6, **caractérisé en ce que** le drone de sauvetage (18) est raccordé au bus de communication (9) par le biais d'une liaison sans fil de courte portée (17).

8. Véhicule selon la revendication 7, **caractérisé en ce que** la liaison sans fil de courte portée (17) est une liaison WLAN, LPWAN, Bluetooth ou infrarouge.

9. Véhicule selon la revendication 7 ou 8, avec au moins un actionneur (11) raccordé au bus de communication (9) pour le fonctionnement du véhicule (1), **caractérisé en ce que** le drone de sauvetage (18) est conçu, dans l'état détaché, pour recevoir des données de commande (24) par le biais du module de communication (13) et pour les envoyer à l'actionneur (11) par le biais de la liaison sans fil de courte portée (17).

10. Véhicule selon la revendication 9, **caractérisé en ce que** l'au moins un actionneur a la fonction d'un verrouillage centralisé, d'un volant de direction, d'une pédale d'accélération ou d'une pédale de freinage pour le fonctionnement du véhicule (1).

11. Véhicule selon l'une des revendications 7 à 10, **caractérisé en ce que** le drone de sauvetage (18) est conçu pour recevoir des données de commande (24) pour un autre véhicule (25) par le biais du module de communication (13) et pour les envoyer à un tel autre véhicule (25) dans l'environnement du véhicule (1) par le biais de la liaison sans fil de courte portée (17).

12. Véhicule selon l'une des revendications 1 à 11, **caractérisé en ce que** le drone de sauvetage (18) est équipé d'une caméra de surveillance (10, 20), d'un éclairage et/ou d'un signal lumineux (28).

13. Véhicule selon l'une des revendications 1 à 12, **caractérisé en ce que** le drone de sauvetage (18) est chargeable par le réseau de bord du véhicule (1), de préférence par induction, et/ou est équipé d'un module solaire.

14. Véhicule selon l'une des revendications 1 à 13, **caractérisé en ce que** le drone de sauvetage (18) est un multicoptère qui est logé, dans l'état amarré, dans ou sur l'enveloppe extérieure (15) du véhicule (1), de préférence de manière étanche.

15. Véhicule selon l'une des revendications 1 à 14, **caractérisé en ce que** le drone de sauvetage (18) est amarré au moyen d'un dispositif d'amarrage (29, 30) magnétique sur le véhicule (1) et peut être repoussé du véhicule (1) par l'inversion des pôles magnétiques du dispositif d'amarrage (29, 30) .
